# EUROPEAN PATENT APPLICATION

(11) **EP 2 808 060 A1**
(43) Date of publication of application: **03.12.2014**
(21) Application number: 13169443.2
(22) Date of filing: 28.05.2013
(51) Int. Cl.: A62C 3/08, B64D 37/32

(54) **Fire extinguishing system for an aircraft**

(71) Applicant: Zodiac Aerotechnics, 78370 Plaisir (FR)
(72) Inventor: Meckes, Rüdiger, 23919 Berkenthin (DE); Rittner, Wolfgang, 23623 Ahrensbök (DE); Boomgaarden, Günter, 23684 Scharbeutz (DE); Krimphove, Christine, 23617 Stockelsdorf (DE); Hoffmann, Frederik, 23617 Stockelsdorf (DE)
(74) Representative: Eisenführ Speiser

(57) **Abstract**

The invention relates to a system for extinguishing and preventing a fire on board of an aircraft. According to the invention, an aircraft is equipped with an On-Board-Inert Gas Generating-System (OBIGGS) unit comprising a device with an OBIGGS inflow port connected to a source of gas mixture, said gas mixture comprising an inert gas component and an outflow port, said OBIGGS unit being adapted to separate said inert gas component out of said source of gas mixture and to provide said inert gas component to said outflow port, a first connector in fluid connection with said outflow port, a first gas conduit connecting said first connector to said fuel tank for providing said inert gas component to a fuel tank, a second connector in fluid connection with said outflow port and a second gas conduit connecting said second connector to at least one target space selected from the cockpit space, the passenger cabin space, the cargo bay

## Description

The invention relates to a system for extinguishing and preventing a fire on board of an aircraft.

A fire on board of an aircraft is a situation which is generally dangerous since both, smoke and heat, might significantly affect the function of essential systems of the aircraft and the possibility of per operating the aircraft by the crew members may be significantly reduced. Thus, fire and smoke on board of an aircraft always bears the risk that the aircraft crashes. Further, fire or smoke might directly endanger the passengers and the crew member during the flight.

The constructive and functional design of aircraft today provides some measures to lower the risk of severe crashes and damages as a result from fire and smoke. For example, it is known to provide heat insulation layers on the walls separating a cargo bay from a passenger cabin to prevent a fire which might be present in the cargo bay to endanger the passenger of the aircraft. These heat insulation layers are designed to maintain a vital atmosphere and condition in the passenger cabin for at least such a time period allowing the pilot to land the aircraft at the nearest airport.

A further measure to prevent severe damage and crashes from fire on board of an aircraft is a redundant functionality of all those operating systems required for essential functions of the aircraft and a distant arrangement of those redundant devices for each other. This reduces the risk that a local fire directly results in a blackout of essential functions of the aircraft and allows the pilot to fly the aircraft even if such local fire has affected one of the devices providing such functions.

Particular attention is given to the fuel tanks of an aircraft since these fuel tanks carry a highly combustible liquid which might further produce highly combustible gas mixtures. To prevent such fuel tank from preserving such highly combustible gas mixtures in a partially or completely emptied state it is known to jet, fill or flood the fuel tanks with an inert gas and to thus neutralize or push aside the combustible gas mixture. It is known to provide halon in pressurized form on board of the aircraft as such an inert gas or to supply an inert gas from an onboard inert gas generating system (OBIGGS). This inert gas flooding of the gas tanks has shown to significantly lower the risk arising from combustible gas mixtures above the fuel level or in empty fuel tanks and is further able to decrease the risk of fire resulting from the liquid fuel in the fuel tank.

As recent incidents show, the risk of fire and smoke on board of an aircraft is still present. It is an object of the invention to provide a method and a system which helps to reduce the risk of severe damages and crashes following from fire and smoke on board of an aircraft.

According to the invention, this object is achieved by an aircraft comprising a fuel tank, a cockpit space, a passenger cabin space and/or a cargo bay, an On-Board-Inert Gas Generating-System (OBIGGS) unit comprising a device with an OBIGGS inflow port connected to a source of gas mixture, said gas mixture comprising an inert gas component and an outflow port, said OBIGGS unit being adapted to separate said inert gas component out of said source of gas mixture and to provide said inert gas component to said outflow port, a first connector in fluid connection with said outflow port, a first gas conduit connecting said first connector to said fuel tank for providing said inert gas component to said fuel tank, wherein said aircraft is in particular characterized by a second connector in fluid connection with said outflow port and a second gas conduit connecting said second connector to at least one target space selected from the cockpit space, the passenger cabin space, the cargo bay.

According to the invention, a system is provided which is able to jet, fill or flood a space on board of the aircraft which is endangered by a fire or smoke. Such space may be the cockpit of the aircraft, the passenger cabin or the cargo bay and any compartments related to such space, e. g. compartments wherein lines or wires of the aircraft are running or any other functional elements are arranged. These compartments can be flooded or filled or vented with an inert gas. An inert gas is to be understood as a gas which does not undergo chemical reactions under given conditions like raised temperature, fire and any chemical and physical reactions related to the presence of such fire. By supplying such an inert gas to a space or compartment within an aircraft a present fire in such a space or compartment can be extinguished for that oxygen in the compartment is no longer present which is required for maintaining and increasing such fire. Further, according to the invention it is possible to provide such inert gas to a compartment or space on board the aircraft as a precautionary matter in a dangerous situation, e. g. before an emergency landing a situation wherein in another compartment or space of the aircraft smoke or fire is present.

According to the invention, the inert gas is preferably provided by an onboard inert gas generating system which is present for generating inert gas for flooding the fuel tanks of the aircraft. Usually, an aircraft comprises such an OBIGGS device since this is prescribed by aviation regulations to flood the fuel tanks and the OBIGGS devices on board of an aircraft have sufficient capability to deliver inert gas to additional spaces and compartments in the aircraft beside the fuel tanks. OBIGGS devices on board of the aircraft often function on the basis of gas separation by membrane diffusion or by selective adsorption of gases to a material or surface to hereby separate nitrogen from oxygen from air taken from outside the aircraft, namely the atmosphere. By this, nitrogen can be provided in a pure or highly concentrated form and such pure or highly concentrated nitrogen can be used as an inert gas and provided to the spaces or compartments within the aircraft to extinguish or prevent a fire therein. Further, such inert gas may displace smoke within such spaces or compartments and eliminate any source of such smoke.

To fulfill the function according to the invention the OBIGGS unit is connected to two connectors, namely said first and second connector to provide said inert gas to the fuel tank and to provide said inert gas to the additional space or compartment of the aircraft, namely the cockpit, the passenger cabin or the cargo bay. It is to be understood that said second connectors can be positioned at a valve unit connected to the OBIGGS unit, a manifold or the like and are not necessarily integral elements of the OBIGGS unit itself. It is further to be understood that the OBIGGS unit, a valve unit connected thereto or a manifold or a controller controlling such inert gas distribution on board of the aircraft may be positioned and arranged such that the fuel tank and one or more additional spaces or compartments of the aircraft are supplied with inert gas simultaneously or that the fuel tank and such additional spaces or compartments are supplied with inert gas alternatively.

According to a first preferred embodiment the fire extinguishing system according to the invention is characterized by a valve unit interconnecting said OBIGGS unit to said at least one target space, a fire or smoke sensor positioned for detecting smoke or fire in said target space, a controller coupled to said valve unit and said fire or smoke sensor, said controller being adapted to open said valve unit upon receipt of a signal from said fire or smoke sensor signalizing fire or smoke, respectively, in said target space.

According to this embodiment the flooding and providing of inert gas to the space or compartment of the aircraft is automatically controlled by an electronic controller which actuates a valve unit. This valve unit controls the flow of inert gas to said space or compartment. The valve unit may be actuated by electrical means, pneumatical means or hydraulic means. Alternatively or additionally, a direct mechanical actuation of the valve unit may be possible, e. g. by manual actuation, to allow the supply of inert gas even in case of a total or partial breakdown of the control systems of the aircraft. The controller is coupled to a fire or smoke sensor like e. g. a temperature sensor or a smoke detector and receives signals from this sensor. The sensor may be arranged within the space or compartment which is to be flooded with inert gas in case of fire or smoke therein or may be positioned within a ventilation or climate control system of such a space or compartment detecting whether the air drawn from said space or compartment has elevated temperature indicating a fire or contains smoke or the like.

The controller may additionally allow manual activation of the valve unit by e. g. a switch or button to be activated by a crew member.

According to further preferred embodiment a reservoir is provided, in particular a pressure tank, for storing the inert gas component wherein said reservoir is connected to said OBIGGS unit for filling said reservoir with said inert gas component and said reservoir is connected to or part of said valve unit for directing said inert gas component into said target space.

Such reservoir allows to store the inert gas on board of the aircraft which is produced by the OBIGGS unit of the aircraft and to thus keep ready a significant volume of inert gas which can be immediately released in case of a smoke or fire event or prevention situation. It is to be understood that OBIGGS units installed on board of current aircrafts for flooding fuel tanks of the aircraft may have a sufficient permanent delivery rate of inert gas for additionally or alternatively flooding a space or compartment like the cargo bay or the passenger cabin of the aircraft with such a flow rate that a fire present in such space is extinguished within a short time period of e. g. less than 30 seconds or a minute. In specific conditions wherein other means for preventing severe damages in such spaces are present, even a longer time for extinguishing such a fire in such space by the flooding with inert gas may be sufficient and thus decreased delivery rate of the OBIGGS unit is acceptable. However, in specific situations or if the OBIGGS unit only provides an insufficient delivery rate of inert gas it is favorable to keep some inert gas in a reservoir on board of the aircraft, wherein said reservoir is continuously filled by the OBIGGS unit during flight or during activation of the OBIGGS unit prior to a flight. This reservoir of inert gas may be released quickly and partially or completely into a space to achieve a quick flooding of said space in case of a fire event or prevention situation in such space.

It is particularly preferred to provide means like partition doors, bulk heads or the like to allow separation of such a space from other spaces in case of a fire event or fire prevention situation and to allow isolated flooding with inert gas..

According to a further preferred embodiment an oxygen sensor is provided for protecting the oxygen content in the target space, said oxygen sensor being coupled to said controller, wherein said controller is adapted to close the valve unit if a sensor signal of said oxygen sensor signalizes that the oxygen content in said target space is below a predetermined threshold. According to this embodiment, the supply of inert gas to a target space like a cockpit, passenger cabin or the cargo bay of an aircraft is maintained until the oxygen content in said target space is reduced significantly or even no oxygen is detectable any more in said target space. According to this embodiment the supply of inert gas can be controlled in a specific way and reduced to the amount required for providing sufficient conditions to extinguish or prevent a fire and smoke in such target space. The embodiment allows to save inert gas of the OBIGGS unit or a reservoir for the event of a subsequent fire or smoke in other spaces or compartments of the aircraft.

According to a further embodiment, said controller is adapted to open the valve unit if a sensor signal of said oxygen sensor signalizes that the oxygen content in said target space is above a predetermined threshold. This embodiment allows to restart the flow of inert gas into such a space if for any reasons the oxygen content in said space has increased after stopping the flow of inert gas to said space, e. g. due to flow of oxygen into said space from outside the aircraft or from other spaces or compartments of the aircraft into said target space. It is to be understood that the predetermined threshold which is indicative for restarting the flow of inert gas into the target space may be identical with the predetermined threshold of oxygen content in said target space which is indicative for stopping the inert gas flow into said target space. Alternatively, different minimum and maximum thresholds may be used and stored in the controller for stopping and starting the flow of inert gas into the target space.

The oxygen content is to be understood in the context of this invention as a volume ratio of the oxygen volume in the gas inside said target space, a mass ratio of the oxygen mass inside the target space in relation to the gas mass inside said target space or the partial oxygen pressure inside the target space or the relation of the molecular weight of oxygen in relation to the average molecular weight of the gas mixture inside said target space.

According to a further preferred embodiment the aircraft is characterized by an On-Board-Oxygen Generating-System (OBOGS) unit comprising a device with an OBOGS inflow port connected to a source of gas mixture, said gas mixture comprising an oxygen component and an oxygen outflow port, said OBOGS unit being adapted to separate said oxygen component out of said gas mixture, to provide said oxygen component to said oxygen outflow port and to provide a remainder of said gas mixture after separation of said oxygen component to a remainder gas outflow port, wherein said remainder outflow port of said OBOGS unit is connected to said OBIGGS inflow port. On board oxygen generating systems are used in aircraft to produce oxygen for supplying passengers or crew members with oxygen in an emergency situation. Such OBOGS units may be operated on the basis of a membrane diffusion technique or a selective adsorption technique. Such OBOGS units separate oxygen out of a gas mixture containing such oxygen wherein said gas mixture may be ambient air, e.g. bleed air drawn from one or more turbines driving the air craft. The OBOGS unit provides highly concentrated or pure oxygen which is the main function of such OBOGS unit. However, the OBOGS unit further provides a gas mixture which has a poor oxygen content or is free of oxygen. This gas mixture has shown to be a preferable gas mixture to be provided to the OBIGGS unit for generating inert gas from said low oxygen gas mixture. Thus, according to the invention it is preferable to connect such outflow port of an OBOGS unit to the inflow port of an OBIGGS to increase the efficiency of the OBIGGS unit allowing to at the same time decrease the dimension and weight of the OBIGGS unit due to its increased efficiency but maintaining the same delivery rate.

It is further preferred in this embodiment to provide a compressor interconnected between said remainder outflow port and said OBIGGS inflow port. By providing such a compressor the pressure of the remainder gas mixture flowing out of the OBOGS unit is increased and can be adapted to a pressure level which is best suited for operating the OBIGGS unit. Vice versa, in some cases it might be preferable to throttle the outflow of the OBOGS unit and to provide the remainder gas of the OBOGS unit at a reduced pressure level to the OBIGS unit.

According to a further preferred embodiment the aircraft comprises a fuel cell having a gas inlet and an exhaust outlet, wherein said exhaust outlet is connected to the OBIGGS inflow port or the second gas conduit. Such fuel cell is used on board of modern aircraft for efficiently producing electric power. The fuel cell is driven by a gas and produces exhaust gas with low oxygen content when being operated to produce electric power. According to this embodiment said exhaust gas with low oxygen content is provided to the inflow port of the OBIGGS unit. By this, the efficiency of the OBIGGS can be increased allowing to reduce the dimension and weight of the OBIGGS unit but maintaining the same delivery rate of inert gas out of the OBIGGS unit at the same time.

A further aspect of the invention is a fire extinguishing and prevention device for an aircraft, comprising An On-Board-Inert Gas Generating-System (OBIGGS) unit comprising a device with an OBIGGS inflow port connected to a source of gas mixture, said gas mixture comprising an inert gas component, and an outflow port, said OBIGGS unit being adapted to separate said inert gas component out of said source of gas mixture and to provide said inert gas component to said outflow port, a first connector or a plurality of first connectors coupled to said outflow port for providing said inert gas component to a fuel tank or a plurality of fuel tanks, respectively, of said aircraft, characterized by a second connector or a plurality of second connectors coupled to said outflow port for providing said inert gas to at least one space selected from a cockpit space of the aircraft, a passenger cabin space of the aircraft, a cargo bay of the aircraft.

The fire extinguishing and prevention device according to the invention comprises a first and a second connector wherein it is to be understood that said first connector may comprise a plurality of first connectors and serves to provide inert gas to a fuel tank of an aircraft. Further, a second connector is provided, wherein said second connector may in the same way comprise a plurality of second connectors. Said second connector is adapted to provide inert gas to one space or a plurality of spaces of an aircraft selected from a cockpit space, a passenger cabin space and a cargo bay of the aircraft. By this, the OBIGGS unit is equipped for extinguishing a fire in one or more of these spaces or preventing a fire to occur or to spread out in these spaces.

The fire extinguishing and prevention device described beforehand may preferably be improved by the characteristics which have been explained above with reference to the aircraft according to the invention comprising an on board inert gas generating system serving as such a fire extinguishing and prevention device.

According to a further aspect of the invention a method for preventing and extinguishing a fire on board of an aircraft during the flight is proposed, the method comprising the steps of producing an inert gas in an On-Board-Inert Gas Generating-System (OBIGGS) unit by supplying a gas mixture, said gas mixture comprising an inert gas component to an OBIGGS inflow port, separating said inert gas component from said gas mixture and providing said inert gas component to an outflow port, directing said inert gas component to a fuel tank of said aircraft characterized by the step of providing said inert gas to at least one target space selected from a cockpit space, a passenger cabin space and/or a cargo bay of the aircraft. This method allows to efficiently extinguish or prevent a fire in any of the spaces on board of an aircraft by using a system for producing inert gas which is already present on board of the aircraft for preventing a fire in the fuel tanks of the aircraft.

The method may be further improved by a valve unit interconnecting said OBIGGS unit to said at least one target space is opened by a controller upon receipt of a signal from a fire or smoke sensor signalizing fire or smoke, respectively, in said target space. Still further, the method may be further improved in that the inert gas component is filled from the OBIGGS unit into a reservoir, in particular a pressure tank, and stored therein said inert gas component is directed from said reservoir to said valve unit for directing said inert gas component into said target space.

Still further, the method may be further improved in that the oxygen content in the target space is detected by an oxygen sensor, the valve unit is closed if a sensor signal of said oxygen sensor signalizes that the oxygen content in said target space is below a predetermined threshold.

According to a further preferred embodiment of the method the valve unit is opened if a sensor signal of said oxygen sensor signalizes that the oxygen content in said target space is above a predetermined threshold.

Finally, the method may be further improved in that oxygen-depleted gas from an On-Board-Oxygen Generating-System (OBOGS) unit and/or exhaust gas from a fuel cell is directed to said OBIGGS inflow port or to said target space.

Regarding the technical details and operation requirements and the advantages of these preferred embodiments of the method reference is made to the corresponding technical details, operational characteristics and advantages of the aircraft and the fire extinguishing and prevention device described beforehand.

Still further an aspect of the invention is the use of an on board inert gas generating systems (OBIGGS) unit comprising a an OBIGGS inflow port connected to a source of gas mixture, comprising an inert gas component, and an outflow port, said OBIGGS unit being adapted to separate said inert gas component out of said source of gas mixture and to provide said inert gas component to said outflow port, for directing inert gas via an inert gas fire extinguishing line to a target space selected from a cockpit space, a passenger cabin space and a cargo bay of an aircraft for extinguishing a fire in said target space or preventing a fire to occur in such target space or hindering a fire from spreading out in such target space, wherein said inert gas produced by said OBIGGS unit is preferably further used for filling the ullage in a fuel tank of the aircraft.

According to this aspect, an OBIGGS unit which is present on board of an aircraft is used for extinguishing, preventing or hindering a fire from spreading out in a cockpit space, a passenger cabin space or a cargo bay of an aircraft. Thereby, the OBIGGS unit is preferably further used to fill an ullage of a fuel tank to prevent a fire from occurring in such fuel tank. This specific use of an OBIGGS unit is particularly preferred for that it allows to use the inert gas which is produced by such OBIGGS unit to reduce the risk of severe fire accidents in the cockpit space, the passenger cabin and the cargo bay.

A preferred embodiment of the invention is shown in the figures.
Figure 1 shows a schematical, longitudinal sectional view of an aircraft equipped with a fire extinguishing and prevention device according to the invention,
Figure 2 shows a detail of the front region of the aircraft shown in figure 1.

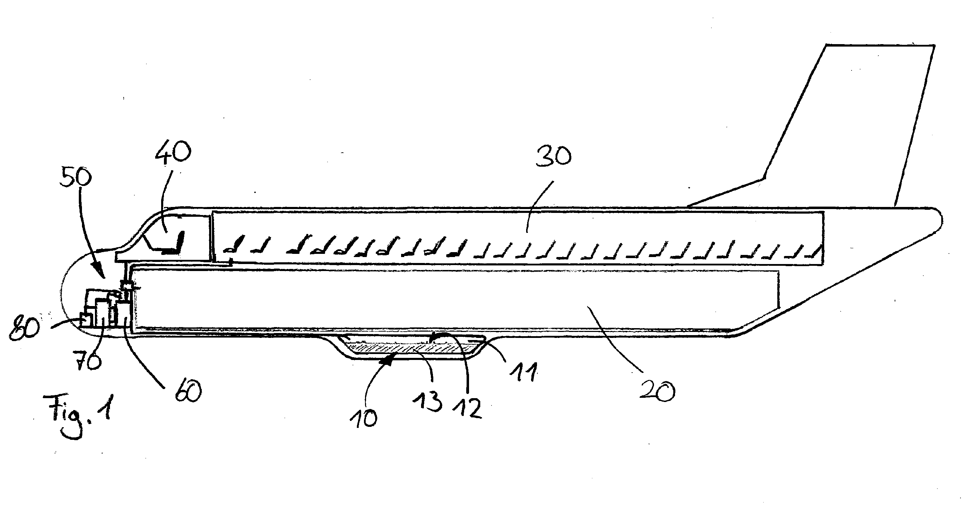

Referring first to figure 1, an aircraft basically comprises four spaces which are relevant to the invention. In the wings and the region of the wings of the aircraft a plurality of fuel tanks is positioned, one of which is shown in the figure and depicted 10. Said fuel tanks may be completely filled before starting of the aircraft but are continuously emptied during flight thus producing an ullage 11 above the level 12 of the liquid fuel 13. In this ullage gaseous parts of the fuel and oxygen may be present resulting in the risk of fire in the fuel tank.

Further, a cargo bay 20 axtends along nearly the whole length of the aircraft. This cargo bay is positioned in the lower region of the aircraft and serves to take up luggage of the passengers and cargo goods. Above the cargo bay a passenger cabin 30 is present which extends along nearly the whole length of the aircraft in the upper region of the hull. In the passenger cabin a plurality of passengers can be seated and facilities for oxygen delivery in case of an emergency are present for each passenger.

Still further, in the front region of the aircraft a cockpit 40 is present wherein usually two pilots and sometimes additional crew members take place.

A system space 50 is shown in the nose section of the aircraft. In this system space 50 number of functional units of the aircraft is accommodated. It is to be understood that the system space 50 could be positioned in other sections of the aircraft and/or the functional units depicted to be arranged in said system space 50 could be separated from each other to be accommodated at distant position within the aircraft.

In the system space 50 an on board inert gas generating system unit 60, an on board oxygen generating system 70 and a fuel cell 80 is accommodated.

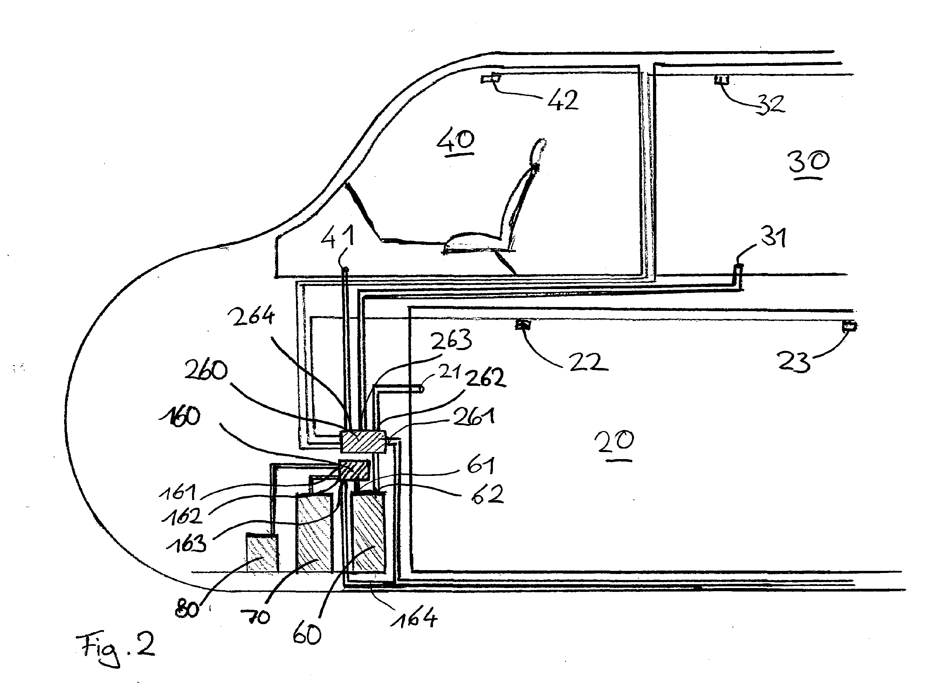

Turning now to figure 2, the system space 50 and the devices accommodated therein are shown in greater detail. The OBIGGS unit 60 comprises an inflow port 61 connected to an inflow control unit 160. The inflow control unit 160 comprises three inflow ports 161, 162, 163. The first inflow port 161 is connected to the fuel cell 80 and receives oxygen depleted gas from said fuel cell. The second inflow port 162 is connected to the OBOGS unit 70 and receives oxygen depleted remainder gas from said OBOGS unit. It is to be understood that the OBOGS unit further comprises an inflow port for bleed air or ambient air and an outflow port for oxygen enriched air but these ports are not depicted in the figure.

The third inflow port 163 of the inflow control unit 160 is connected to a bleed air line 164 supplying bleed air to said inflow control unit.

The inflow control unit 160 is coupled for signal transmission to the fuel cell 80, the OBOGS unit 70, the OBIGGS unit 60 and a control panel (not shown). The control panel allows to switch the inflow control unit in different status. Still further, the inflow control unit is adapted to switch between different status of a number of valve units comprises in the inflow control unit depending on the needs of the OBIGGS unit and the operation of the OBOGS unit and the fuel cell. Generally, the inflow control unit may be switched in a status wherein gas from all three inflow ports is provided to the inflow port of the OBIGGS unit. Depending on the operation of the fuel cell and the OBOGS unit in another status only gas from the first inflow port may be provided to the OBIGGS unit. In a further status only gas from the second inflow port and a still further status only gas from the third inflow port may be provided to the OBIGS unit. Still further, gas from two of the three inflow ports may be provided to the OBIGGS unit in a further status.

The OBIGGS unit further comprises an outflow port 62. The outflow port 62 is connected to an outflow control unit 260. The OBIGGS unit provides inert gas to the outflow control unit 260. The outflow control unit 260 comprises four outflow ports 261-264. The first outflow port 261 is connected via a piping to the fuel tank 10 and permanently fills the ullage above the fuel level with inert gas to prevent an explosive or combustible gas mixture to be present in said ullage. It is to be understood that a plurality of first outflow ports 261 may be present to selectively provide inert gas to a plurality of fuel tanks or that the piping connecting to the first outflow port of the outflow control unit may be connected to a manifold distributing the inert gas to a plurality of fuel tanks.

The second outflow port 262 is connected to the cargo bay 20. The connection to the cargo bay 20 is shown as a single piping having an outlet 21 but it is to be understood that this connection may be designed in such a way to comprise a manifold in said piping and a plurality of outflow ports of said piping into the cargo bay to allow homogenous and quick flooding of the cargo bay with inert gas out of the second outflow port 262.

The third outflow port 263 is connected via a piping to the passenger cabin space. Again, it is to be understood that a plurality of outflow ports 31 out of said piping into the passenger cabin space may be present although only one such outflow port 31 is depicted.

The fourth outflow port 264 is connected via a piping to an outflow port 41 opening out into to the cockpit space 40 of the aircraft.

The outflow control unit 260 is adapted to selectively provide inert gas to the cargo bay 20, the passenger cabin space 30, the cockpit space 40 and the fuel tank 10. Inert gas may be provided to all these spaces simultaneously or to only one or some of these spaces simultaneously. The control of the inert gas flow to one or more of these spaces can be accomplished by a control panel (not shown) which is positioned in the cockpit space to be actuated by a crew member.

The flow of inert gas to the fuel tanks of the aircraft maybe controlled by the outflow control unit 260 or may be conducted without control in a permanent supply as a precautionary measure.

Still further, the outflow control unit 260 is adapted for automatic delivery of inert gas to any of these spaces. To accomplish such automatic delivery, sensor units are coupled for signal transmission to the outflow control unit.

A plurality of cargo bay sensor units 22, 23 are coupled to the outflow control unit 260. Further, a plurality of passenger cabin sensor units 32 and a cockpit sensor unit 42 is coupled for signal transmission to the outflow control unit 260.

Each of the sensor units 22, 23, 32, 42 comprises a smoke sensor and a temperature sensor for detecting smoke or fire in the region of the cargo bay, passenger cabin or cockpit space where the sensor unit is positioned. Upon detection of such smoke or fire a corresponding signal is transmitted to the outflow control unit and the outflow control unit will activate a valve unit comprised in said outflow control unit to provide inert gas to the space where the smoke or fire has been detected. The outflow control unit may further activate valve units for providing inert to other spaces as a precautionary measure to prevent the smoke or fire from spreading out into these additional spaces.

Each sensor unit further comprises an oxygen sensor for detecting the amount of oxygen present in the region of the sensor unit. The amount of oxygen maybe detected as a concentration of oxygen or a partial oxygen pressure. Each sensor unit provides a signal corresponding to the amount or concentration or partial pressure of oxygen present in the corresponding space. This allows to control the flow of inert gas automatically depending on such oxygen concentration. In particular, the outflow control unit 260 may provide inert gas to a space until a predetermined level oxygen concentration, oxygen content or partial oxygen pressure in the space has fallen below said predetermined level. The flow of inert gas may then be stopped and be activated in case that the oxygen concentration, partial oxygen pressure or oxygen content again excites said predetermined level.

Generally it is to be understood that in case of providing inert gas to the cockpit space 40 or the passenger cabin space 30 the crew members and passengers, respectively, are supplied with oxygen from an emergency oxygen device since the ambient air in said space is depleted from oxygen and does not allow regular breathing out of said space any more.

The outflow control unit 260 comprises a pressure reservoir for storing inert gas at an elevated pressure. This pressurized reservoir shall usually be filled before operating the aircraft. The continuous flow of inert gas out of the OBIGGS unit 60 is used to fill said pressurized reservoir with inert gas. The pressurized reservoir allows to release a large amount of inert gas within a short time period into any space of the aircraft in case of an emergency fire or smoke situation. It is to be understood that the continuous flow of inert gas out of the OBIGGS unit may be used to directly supply inert gas to any of the spaces and the quick flow of inert gas out of said pressure reservoir may be used additionally in a bypass arrangement to this continuous flow. The provision of inert gas to the pressure reservoir and the release of said stored inert gas is controlled by valve units comprised in the outflow control unit.

## Claims

1. An aircraft, comprising
- a fuel tank,
- a cockpit space
- a passenger cabin space and/or a cargo bay,
- an On-Board-Inert Gas Generating-System (OBIGGS) unit comprising a device with an OBIGGS inflow port connected to a source of gas mixture, said gas mixture comprising an inert gas component and an outflow port, said OBIGGS unit being adapted to separate said inert gas component out of said source of gas mixture and to provide said inert gas component to said outflow port,
- a first connector in fluid connection with said outflow port,
- a first gas conduit connecting said first connector to said fuel tank for providing said inert gas component to said fuel tank,
- **characterized by** a second connector in fluid connection with said outflow port
- a second gas conduit connecting said second connector to at least one target space selected from the cockpit space, the passenger cabin space, the cargo bay.

2. Aircraft according to claim 1, **characterized by**
- a valve unit interconnecting said OBIGGS unit to said at least one target space,
- a fire or smoke sensor positioned for detecting smoke or fire in said target space,
- a controller coupled to said valve unit and said fire or smoke sensor, said controller being adapted to open said valve unit upon receipt of a signal from said fire or smoke sensor signalizing fire or smoke, respectively, in said target space.

3. Aircraft according to claim 2, **characterized by**
- a reservoir, in particular a pressure tank, for storing the inert gas component, wherein - said reservoir is connected to said OBIGGS unit for filling said reservoir with said inert gas component and
- said reservoir is connected to said valve unit for directing said inert gas component into said target space.

4. Aircraft according to claim 2 or 3, **characterized by** an oxygen sensor for detecting the oxygen content in the target space, said oxygen sensor being coupled to said controller, wherein said controller is adapted to close the valve unit if a sensor signal of said oxygen sensor signalizes that the oxygen content in said target space is below a predetermined threshold.

5. Aircraft according to claim 4, **characterized in that**
said controller is adapted to open the valve unit if a sensor signal of said oxygen sensor signalizes that the oxygen content in said target space is above a predetermined threshold.

6. Aircraft according to any of the preceding claims, **characterized by** an On-Board-Oxygen Generating-System (OBOGS) unit comprising a device with an OBOGS inflow port connected to a source of gas mixture, said gas mixture comprising an oxygen component and an oxygen outflow port, said OBOGS unit being adapted to separate said oxygen component out of said gas mixture, to provide said oxygen component to said oxygen outflow port and to provide a remainder of said gas mixture after separation of said oxygen component to a remainder gas outflow port,
wherein said remainder outflow port of said OBOGS unit is connected to said OBIGGS inflow port.

7. Aircraft according to claim 6, **characterized by**
a compressor interconnected between said remainder outflow port and said OBIGGS inflow port.

8. Aircraft according to any of the preceding claims, **characterized by** a fuel cell having a gas inlet and an exhaust outlet, wherein said exhaust outlet is connected to the OBIGGS inflow port or the second gas conduit.

9. Fire extinguishing and prevention device for an aircraft, comprising an On-Board-Inert Gas Generating-System (OBIGGS) unit comprising a device with an OBIGGS inflow port connected to a source of gas mixture, said gas mixture comprising an inert gas component, and an outflow port, said OBIGGS unit being adapted to separate said inert gas component out of said source of gas mixture and to provide said inert gas component to said outflow port,
a first connector or a plurality of first connectors coupled to said outflow port for providing said inert gas component to a fuel tank or a plurality of fuel tanks, respectively, of said aircraft,
**characterized by** a second connector or a plurality of second connectors coupled to said outflow port for providing said inert gas to at least one space selected from a cockpit space of the aircraft, a passenger cabin space of the aircraft, a cargo bay of the aircraft.

10. Fire extinguishing and prevention device according to claim 9, wherein said fire extinguishing and prevention device is further improved by the characteristics of any of the preceding claims 2-8.

11. Method for preventing and extinguishing a fire on board of an aircraft during flight, comprising:
producing an inert gas in an On-Board-Inert Gas Generating-System (OBIGGS) unit by supplying a gas mixture, said gas mixture comprising an inert gas component to an OBIGGS inflow port, separating said inert gas component from said gas mixture and providing said inert gas component to an outflow port,
directing said inert gas component to a fuel tank of said aircraft
**characterized by** the step of providing said inert gas to at least one target space selected from a cockpit space, a passenger cabin space and/or a cargo bay of the aircraft.

12. Method according to claim 11, **characterized in that** a valve unit interconnecting said OBIGGS unit to said at least one target space is opened by a controller upon receipt of a signal from a fire or smoke sensor signalizing fire or smoke, respectively, in said target space

13. Method according to claim 12, **characterized in that** the inert gas component is filled from the OBIIGS unit into a reservoir, in particular a pressure tank, and stored therein said inert gas component is directed from said reservoir to said valve unit for directing said inert gas component into said target space.

14. Method according to claim 12 or 13, **characterized in that**
- the oxygen content in the target space is detected by an oxygen sensor,
- the valve unit is closed if a sensor signal of said oxygen sensor signalizes that the oxygen content in said target space is below a predetermined threshold.

15. Method according to claim 14, **characterized in that** the valve unit is opened if a sensor signal of said oxygen sensor signalizes that the oxygen content in said target space is above a predetermined threshold.

16. Method according to any of the preceding claims 11-15, **characterized in that**
- oxygen-depleted gas from an On-Board-Oxygen Generating-System (OBOGS) unit and/or
- exhaust gas from a fuel cell
is directed to said OBIGGS inflow port or to said target space.

17. Use of an on board inert gas generating systems (OBIGGS) unit comprising a an OBIGGS inflow port connected to a source of gas mixture, comprising an inert gas component, and an outflow port, said OBIGGS unit being adapted to separate said inert gas component out of said source of gas mixture and to provide said inert gas component to said outflow port, for directing inert gas via an inert gas fire extinguishing line to a target space selected from a cockpit space, a passenger cabin space and a cargo bay of an aircraft for extinguishing a fire in said target space or preventing a fire to occur in such target space or hindering a fire from spreading out in such target space, wherein said inert gas produced by said OBIGGS unit is preferably further used for filling the ullage in a fuel tank of the aircraft.
